# EUROPEAN PATENT SPECIFICATION

(11) **EP 1 700 688 B1**
(45) Date of publication and mention of the grant of the patent: **07.05.2014**
(21) Application number: 06005067.1
(22) Date of filing: 13.03.2006
(51) Int. Cl.: B32B 5/24, B32B 9/06, B32B 27/04

(54) **Flexible composite material resistant to perforation, process for its preparation and corresponding products**
Flexibler, perforationsbeständiger Verbundwerkstoff, Verfahren zu seiner Herstellung und entsprechende Erzeugnisse
Matériau composite souple résistant à la perforation, son procédé de fabrication et les produits correspondants

(30) Priority: 11.03.2005 EP 05425142
(43) Date of publication of application: 13.09.2006
(73) Proprietor: Romanore SpA, 46030 Pomponesco MN (IT)
(72) Inventor: Frati, Maria Giovanna, 46019 Viadana (MN) (IT)
(74) Representative: Gislon, Gabriele

(56) References cited:
- US-A- 6 051 301

## Description

The present invention concerns a flexible composite material for protection against perforations, a process for their production and the related products thus obtained. In particular, the invention concerns a flexible laminate having anti-perforation characteristics, its production and the products such as panels, shoe sole inserts and other flexible, perforation resistant products.

Flexible perforation resistant materials are required for a number of final uses such as in safety shoes and safety gear and clothing in general.

Composite laminates for use as armours are known in the art.

US-A-4486491 discloses a non-ricocheting armour panel at least 10 mm thick, that resists a 9 mm Luger or heavier gun bullet. The panel is made of a central core of fiberglass layers impregnated with resin and laminated to a plurality of paper layers to give a rigid armoured panel. At least 10 layers of paper are recommended per side of the core; a typical embodiment comprises 18 layers of woven fiberglass impregnated with melamine resin and bonded together, plus 18 layers of paper impregnated with resin on each side of the core. The total number of layers is 54 and the thus obtained panel is 0.5 in (1.27 cm) thick and rigid. In an alternative embodiment, each layer of woven fibreglass is sandwiched between two layers of impregnated paper to form a core, the core being laminated on each side with 16 layers of impregnated paper. The laminated, i.e. composite, material thus obtained is rigid and not usable for the products of the present invention.

US-A-6051301 discloses a structural panel for building elements such as beams and columns, wherein the laminate comprises a plurality of fibers parallel to each other, extending along the longitudinal axis of the panel and held in a resin casing, a plurality of wood pieces and cellulose material attached to the fiber-containing resin and to the wood segments. This panel is devised for supporting loads in a building and is not suitable for use as a flexible element for safety gear and clothing.

Materials for perforation resistant safety gear are known. For example, metal inserts are used as protections for shoe soles; patent US-A-5237758 describes a wire net insert for use in the soles of safety shoes. This solution results in a heavy shoe, expensive and complicated to produce.

Perforation resistant composite materials are described, for example, in US-A-5614305, which refers to the publication Composites Science and Technology, 1990, Vol. 38. US-A-5614305 describes composite materials consisting of layers of carbon or graphite fibre laminated with thermosetting polymer matrixes: these products, however, are said to be not highly resistant, as they do not have a mechanism for dissipation of the energy beyond the yield point. To solve this problem composite materials are proposed in which SMA (shape memory alloy) fibres are used. These fibres are described as giving products with far superior characteristics to those of similar products using aramidic fibres.

The materials to be used according to the solutions proposed in US-A-5237758 and in US-A-5614305 are, however, complex and expensive to manufacture; furthermore, said materials involve the use of metals, which makes them unsuitable for certain uses and in any case poses drawbacks such as the thermal and electrical conductivity typical of metals, their considerable weight and the fact that they activate metal detectors.

It is therefore necessary to produce a material resistant to perforation which is substantially free of metal elements, inexpensive to produce and having good flexibility and mechanical characteristics suitable to provide the required resistance to perforation even with an extremely low thickness of the material.

It is the aim of the present invention to solve the above discussed problems by providing a flexible composite material resistant to perforation comprising a textile fibre fabric layer, characterised in that said fabric layer is a layer of textile fibres in the form of a woven or non-woven fabric, containing 50%-100% (w/w) of aramidic fibres, said fabric layer containing 0% to 50% (w/w) of a phenolic resin, and in that said fabric layer is laminated between at least two layers of paper impregnated with phenolic resin.

Preferably, the thickness of the said composite material is 3.0 mm or less, generally in the range of 0.5 to 3.0 mm, and preferably in the range of 0.8 to 2.0 mm.

According to an aspect of the invention, the fabric layer of aramidic fibers contains up to 50% by weight of a further fiber, preferably woven together with the aramidic fibers, said additional fiber being selected from PE-UHMW fibres, carbon fibres, glass fibres, and their mixtures. Preferably the additional fibres are glass fibers and are in the form of a weft and warp (i.e. woven) fabric with the aramidic fibers.

According to a further aspect of the invention, the paper layers contain 30-50% by weight of phenolic resin. Thus, the total amount of phenolic resin to be used in the laminate material of the invention is at most 50% by weight of the combined weight of paper and fiber layers.

In an embodiment of the invention, there are two or more layers of textile fibres fabric, alternating with sheets of kraft paper plus phenolic resin.

The material according to the invention has several advantages with respect to the materials according to the known technique.

Firstly, it was found that notwithstanding it has a very low thickness range, the laminate of the invention has properties of perforation resistance comparable to or better than corresponding known materials containing wire inserts of metal. At the same time, the material is extremely lightweight and can reach a very good level of flexibility without delamination. This feature clearly distinguish the invention from the above mentioned prior art relevat to armoured panels and building panels.

Furthermore, the invention laminate is a material free of any metal elements such as inserts and similar, consequently it is a thermal and electrical insulator. A further advantage is the fact that the panels of material can be easily cut, by die cutting for example, to obtain the required products.

As mentioned above, one use of the material according to the invention is for safety shoe insoles or insert for soles, where it can replace known metal soles inserts. These soles inserts or insoles are therefore a subject of the present invention.

The laminate panels produced with the material claimed, which require further processing to obtain the end product, are also considered as falling within the scope of the invention.

Examples of end products are, in addition to the above-mentioned insoles for shoes, elements for protective clothing such as vests and similar, sports protection accessories for the body such as knee pads, elbow pads and shin pads, protective elements included in sports clothing such as fencing suits or other sportswear, hats, caps, jackets, tracksuits, trousers or gloves.

Other examples of possible end products are, for example, furnishing panels, panels for doors, panels for motor vehicle interiors and fittings and other means of locomotion, for example buses and trains, and protective elements in general.

The invention also comprises a method for production of the material described above, said process involving lamination of the above-mentioned textile fibres fabric layer with at least two layers of kraft paper and phenolic resin according to the lamination processes normally used for the production of plastic laminates.

According to the invention method, the textile layer to be used in lamination process has a content of 0% to 50% (w/w) of phenolic resin before laminating it with the impregnated kraft paper. The kraft paper before lamination step has a content of phenolic resin within the range of 30% to 50% by weight.

The invention will now be described in further detail with reference to the drawings attached for illustrative non-limiting purposes, where:
- figures 1a and 1b are schematic views, respectively in section (fig.1 a) and exploded (fig.1b), of a composite material according to the invention;
- figures 2a and 2b are views analogous to those of fig. 1 a and 1b of a further embodiment of the invention.; and
- figures 3a and 3b are a sectional and perspective view of the laminate product of fig.s 1a and 1b having an exterior grid-shaped coating for later assembly in a shoe.

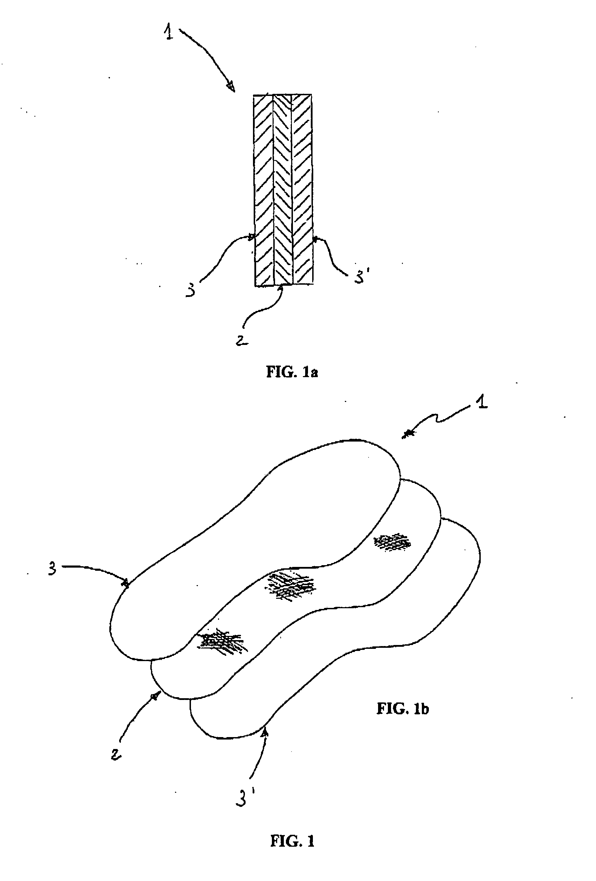

With reference to figure 1, the material according to the invention comprises a layer 2 of fabric containing 100% to 50% by weight of aramidic fibres; suitable aramidic fibers are commercially known as Kevlar®, Nomex® and

Twaron® and their mixtures are also suitable for the purpose of the invention. The core textile layer 2 is bonded on both sides with two layers 3 and 3' of paper impregnated with phenolic resin of the type normally used for the production of plastic laminates.

The aramidic fabric is preferably woven (weft and warp) with a gram weight of between 60 and 450g/m² and it has a content of phenolic resin, before lamination, within the range of 0% to 50% by weight of the textile layer.

The paper used is preferably Kraft paper with a gram weight of between 80 and 200 g/m²; the amount of phenolic resin with which the paper is impregnated is within the range of 30 to 50% by weight before lamination, i.e. wet. It is noticed that even after lamination, i.e. after having being processed in the lamination press, the percent of phenolic resin in the product is substantially within the above mentioned ranges. In other words, this means that the total amount of phenolic resin to be used in the laminate material of the invention is at most 50% by weight of the combined weight of paper and fiber layers.

The woven (or non-woven) fabric layer is preferably free of phenolic resin before lamination: the resin provided in the paper layers is normally sufficient to ensure a proper and reliable coupling of fabric layer 2 to the paper layers 3 and 3'. Fabric layers of aramidic fibers free of phenolic resin are commercially available and can comprise some amount of a "connecting" compound that keeps together the fibers until the fabric is coupled to the paper layers.

As previously mentioned the maximum amount of resin in the textile fibers fabric layer 2 is 50% by weight and preferably, if present, the amount of resin is 30% or less.

According to a further embodiment of the invention, polyethylene fibres with ultra-high molecular weight (PE-UHMW = Ultra-High Molecular Weight Polyethylene), carbon fibres, glass fibres and their mixtures are used in addition to the aramidic fibres, provided that the amount of aramidic fibers is not less than 50% by weight of the total fibers weight in the fabric layer.

In the preferred embodiment of a mixed fiber fabric layer, aramidic fibers and glass fibers are used. The two fibers are used one as the warp and the other as the weft (or filling) in a woven process to give an interwoven product.

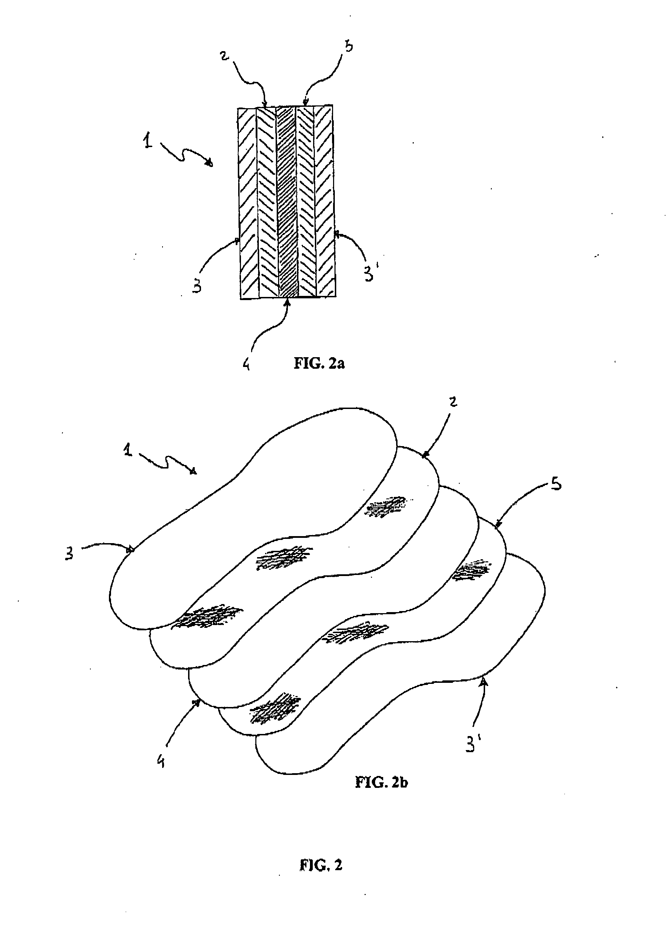

Fig. 2 refers to a further embodiment of the invention, in which there are two outer layers of kraft paper 3 and 3' and two inner layers, 2 and 5, of aramidic fabric; between layers 2 and 5 there is a layer 4 of paper impregnated with phenolic resin. This embodiment provides very high resistance to perforation and is preferable to the use of one single layer 2 of fabric with a high gram weight.

The thickness of the laminate, i.e. composite, material according to the invention is 3.5 mm or less, generally less than 3.0 mm, preferably in the range of 0.5 mm to 2.5 mm and more preferably within 0.8 to 2.0 mm.

Fabric 2 and outer layers 3 and 3' are bonded according to the techniques similar to those used in the production of plastic laminates, i.e. the High Pressure Laminatiion (HPL) and the Continuous Pressure Lamination (CPL) processes. The HPL technique makes use of a heated press which exerts a pressure of between 60 kg/cm² and 150 kg/cm², preferably a pressure equal to approximately 60 to 80 kg/cm². The temperature at which bonding is carried out is set within the range of 100°C to 200°C according to the characteristics of the products to be bonded. For example, in the described embodiment having a fabric consisting of aramidic fibres and Kraft paper with phenolic resin, the bonding temperature is approximately 160°C.

Continuous (CPL) lamination is carried out in a heated continuous press where the layers are laminated together under a pressure within the range of 20 to 80 kg/cm², at a speed of between 1 to 20 m/min. Preferred parameters are a pressure of about 30 kg/cm² and a speed of 7-8 m/min.

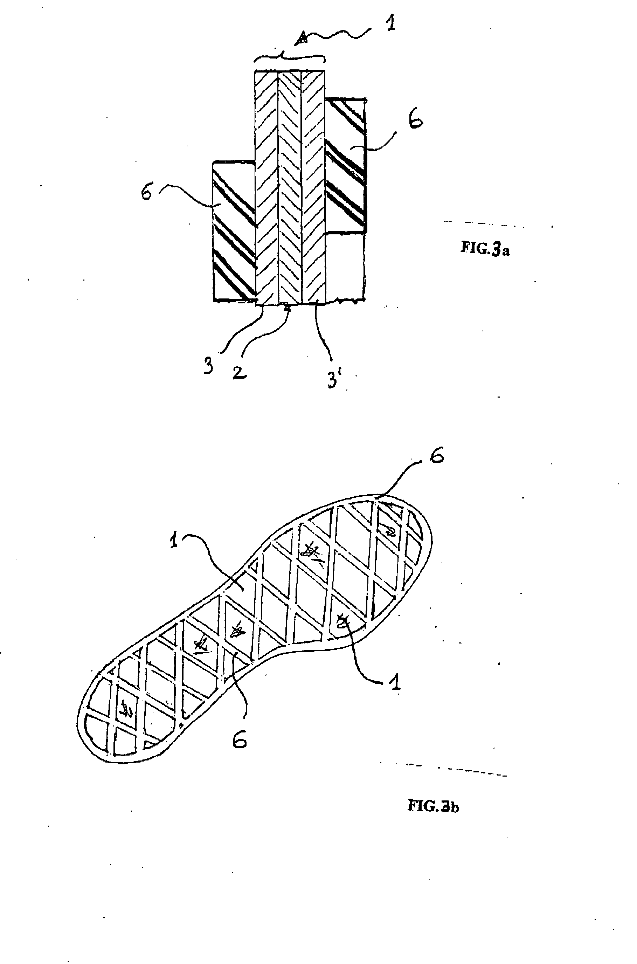

Once a panel has been obtained, it can be cut or shaped into the required shape. In the case of a liner for a shoe, the shape is that shown in figures 1a-2b. Figures 3a and 3b show the laminate 1 of fig.s 1a-1b around which a housing means has been co-moulded for further use in shoe production.

As shown, the laminate 1 is enclosed in a grid structure 6 made of a thermoplastic material, or of rubber, that makes the laminate product ready for use in the production of the shoe or of the shoe sole.

The laminate of the invention has shown to be perforation resistant and to be suitable to replace known products comprising metal inserts such as those previously discussed. The use of the outer paper layers 3 and 3' results in a product that can comply with the requirements of resistance to perforation requested for safety shoes and safety gear in general.

These requirements are verified through tests that are carried out by using a dynamometer having a steel point to which a force of at least 1.100 Newton is applied; the relevant norm is UNI 8615. The results obtained are particularly surprising, especially when taking into account the paper composition of the layers 3 and 3'.

## Claims

1. A flexible composite material (1), comprising at least one layer of textile fibres (2) and two or more layers of impregnated paper (3,3'), **characterised in that** said layer of fibres (2) is a fabric layer of textile fibres containing 50%-100% (w/w) of aramidic fibres, said fabric layer '" containing 0% to 50% (w/w) of a phenolic resin and **in that** said fabric layer is laminated between said at least two layers (3,3') of paper impregnated with phenolic resin.

2. A flexible composite material according to claim 1, wherein the amount of phenolic rein in said paper layers is within the range of 30% to 50% by weight.

3. A flexible composite material according to claim 1 or 2, wherein said fabric layer of textile fibers comprises up to 50% (w/w) of additional fibers different from aramidic fibers selected from PE-UHMW fibres, glass fibres and mixtures thereof, said additional fibers being woven together with said aramidic fibers to form a mixed fabric layer.

4. A composite material (1) according to any previous claim, having a thickness of 3.0 mm or less.

5. A sole insert for protective shoes, **characterised in that** it comprises a layer of composite material (1) according to any previous claim.

6. Protective sports accessories for the body **characterised in that** they comprise a composite material (1) as claimed in one of claims1 to 4.

7. Protective clothing items comprising a layer of composite material (1) as claimed in one of the claims 1 to 5.

8. A method of producing a flexible composite material according to any claim 1 to 4, **characterized in** laminating at least one fabric layer of textile fibres (2) containing 50%-100% (w/w) of aramidic fibres, said fabric layer containing 0% to 50% (w/w) of a phenolic resin, together with at least two layers (3,3') of paper impregnated with phenolic resin.

9. A method according to claim 1, wherein the amount of phenolic resin in said paper layers (3, 3') is within the range of 30% to 50% by weight before lamination.

10. A method according to claims 8 or 9, wherein said lamination is a continuous lamination process.

11. The use of a flexible laminate material according to any claim 1 to 5 for the production of safety and protective gear:

## Patentansprüche

1. Flexibles Verbundmaterial (1), umfassend mindestens eine Schicht Textilfasern (2) und zwei oder mehrere Schichten imprägniertes Papier (3,3'), **dadurch gekennzeichnet, dass** die Schicht aus Fasern (2) eine Gewebeschicht aus Textilfasern ist, welche zu 50 % bis 100 % (w/w) Aramidfasern enthält, die Gewebeschicht zu 0 % bis 50 % (w/w) ein Phenolharz enthält und die Gewebeschicht zwischen den mindestens zwei Schichten (3,3') aus mit Phenolharz imprägniertem Papier laminiert ist.

2. Flexibles Verbundmaterial nach Anspruch 1, wobei die Menge an Phenolharz in den Papierschichten im Bereich von 30 Gewichts-% bis 50 Gewichts-% liegt.

3. Flexibles Verbundmaterial nach Anspruch 1 oder 2, wobei die Gewebeschicht aus Textilfasern bis zu 50 % (w/w) zusätzliche Fasern umfasst, die sich von Aramidfasern unterscheiden und aus PE-UHMW-Fasern, Glasfasern und Mischungen davon ausgewählt werden, wobei die zusätzlichen Fasern gemeinsam mit den Aramidfasern verwebt sind, um eine gemischte Gewebeschicht zu bilden.

4. Verbundmaterial (1) nach einem der vorhergehenden Ansprüche mit einer Dicke von 3,0 mm oder weniger.

5. Eine Einlegesohle für Sicherheitsschuhe, **dadurch gekennzeichnet, dass** sie eine Schicht aus Verbundmaterial (1) nach einem der vorhergehenden Ansprüche umfasst.

6. Schutzsportzubehöre für den Körper, **dadurch gekennzeichnet, dass** sie ein Verbundmaterial (1) wie in einem der Ansprüche 1 bis 4 beansprucht umfassen.

7. Schutzkleidungsstückgegenstände, umfassend eine Schicht aus Verbundmaterial (1) wie in einem der Ansprüche 1 bis 5 beansprucht.

8. Verfahren zur Herstellung eines flexiblen Verbundmaterials nach einem der Ansprüche 1 bis 4, **gekennzeichnet durch** das Laminieren von mindestens einer Gewebeschicht aus Textilfasern (2), welche zu 50 % bis 100 % (w/w) Aramidfasern enthält, wobei die Gewebeschicht zu 0 % bis 50 % (w/w) ein Phenolharz enthält, mit mindestens zwei Schichten (3,3') aus mit Phenolharz imprägniertem Papier

9. Verfahren nach Anspruch 1, wobei die Menge an Phenolharz in den Papierschichten (3,3') vor dem Laminieren im Bereich von 30 Gewichts-% bis 50 Gewichts-% liegt.

10. Verfahren nach einem der Ansprüche 8 oder 9, wobei die Laminierung ein kontinuierlicher Laminierungs-Prozess ist.

11. Die Verwendung eines flexiblen Laminatmaterials nach einem der Ansprüche 1 bis 5 für die Herstellung von Sicherheits- und Schutzausrüstung.

## Revendications

1. Matériau composite flexible (1), comprenant au moins une couche de fibres textiles (2) et deux, ou plus, couches de papier imprégné (3, 3'), **caractérisé en ce que** ladite couche de fibres (2) est une couche de tissu de fibres textiles contenant 50 % à 100 % (en poids) de fibres aramidiques, ladite couche de tissu contenant 0 % à 50 % (en poids) d'une résine phénolique et **en ce que** ladite couche de tissu est stratifiée entre lesdites au moins deux couches (3, 3') de papier imprégné avec de la résine phénolique.

2. Matériau composite flexible selon la revendication 1, dans lequel la quantité de résine phénolique dans lesdites couches de papier est au sein de la plage de 30 % à 50 % en poids.

3. Matériau composite flexible selon la revendication 1 ou 2, dans lequel ladite couche de tissu de fibres textiles comprend jusqu'à 50 % (en poids) de fibres supplémentaires, différentes des fibres aramidiques, sélectionnées parmi des fibres PE-UHMW, des fibres de verre et des mélanges de celles-ci, lesdites fibres supplémentaires étant tissées conjointement avec lesdites fibres aramidiques pour former une couche de tissu mélangée.

4. Matériau composite (1) selon une quelconque revendication précédente, possédant une épaisseur de 3,0 mm ou moins.

5. Pièce rapportée de semelle pour chaussures de protection, **caractérisée en ce qu'**elle comprend une couche de matériau composite (1) selon une quelconque revendication précédente.

6. Accessoires de protection sportifs pour le corps, **caractérisés en ce qu'**ils comprennent un matériau composite (1) selon une des revendications 1 à 4.

7. Articles d'habillement de protection comprenant une couche de matériau composite (1) selon une des revendications 1 à 5.

8. Procédé de production d'un matériau composite flexible selon une quelconque revendication 1 à 4, **caractérisé par** la stratification d'au moins une couche de tissu de fibres textiles (2) contenant 50 % à 100 % (en poids) de fibres aramidiques, ladite couche de tissu contenant 0 % à 50 % (en poids) d'une résine phénolique, conjointement avec au moins deux couches (3, 3') de papier imprégné avec de la résine phénolique.

9. Procédé selon la revendication 1, dans lequel la quantité de résine phénolique dans lesdites couches de papier (3, 3') est au sein de la plage de 30 % à 50 % en poids avant la stratification.

10. Procédé selon les revendications 8 ou 9, dans lequel ladite stratification est un procédé de stratification continue.

11. Utilisation d'un matériau stratifié flexible selon une quelconque revendication 1 à 5 pour la production de matériel de sécurité et de protection.
